# EUROPÄISCHE PATENTANMELDUNG

(11) **EP 4 353 773 A1**
(43) Veröffentlichungstag der Anmeldung: **17.04.2024**
(21) Anmeldenummer: 23211952.9
(22) Anmeldetag: 13.10.2020
(51) Int. Cl.: C08J 11/04, C08L 25/08

(54) **VERFAHREN ZUR HERSTELLUNG VON STYROL-MONOMEREN DURCH DEPOLYMERISATION EINER STYROL-COPOLYMER-HALTIGEN POLYMERMASSE**

(30) Priorität: 15.10.2019 EP 19203427
(62) Teilanmeldung aus: 20792358.2
(71) Anmelder: INEOS Styrolution Group GmbH, 60325 Frankfurt (DE)
(72) Erfinder: Niessner, Norbert, 67159 Friedelsheim (DE); Wilhelmus, Bianca, 63456 Hanau (DE); Cochran, Thomas W., Wilmington, 60481 (US)
(74) Vertreter: Jacobi, Markus Alexander

(57) **Zusammenfassung**

Die Erfindung betrifft ein Verfahren zur Herstellung von Styrol-Monomeren durch Depolymerisation (Abbau) einer Styrol-Copolymer-haltigen Polymermasse, eine Vorrichtung zur Durchführung des Verfahrens, die Verwendung eines Styrol-Copolymers zur Herstellung von Styrol-Monomeren durch thermische Depolymerisation sowie die Verwendung eines Styrol-Copolymers als Zusatz bei der thermischen Depolymerisation von Polystyrol. Die Polymermasse enthält I) 10 bis 100 Gew.-%, bezogen auf das Gesamtgewicht der Polymermasse (A), eines Styrol-Copolymers (I) umfassend: Ia) 10 bis 99 Gew.-%, bezogen auf das Styrol-Copolymer (I), an Wiederholungseinheiten (la), die von Styrol stammen; und Ib) 1 bis 90 Gew.-%, bezogen auf das Styrol-Copolymer (I), an Wiederholungseinheiten (Ib), die von einem Monomer stammen, dessen Homopolymere eine Ceiling-Temperatur unter 350 °C aufweisen; II) optional 0 bis 90 Gew.-% an Polystyrol (II).

## Beschreibung

Die Erfindung betrifft ein Verfahren zur Herstellung von Styrol-Monomeren durch Depolymerisation (Abbau) einer Styrol-Copolymer-haltigen Polymermasse, eine Vorrichtung zur Durchführung des Verfahrens, die Verwendung eines Styrol-Copolymers zur Herstellung von Styrol-Monomeren durch thermische Depolymerisation sowie die Verwendung eines Styrol-Copolymers als Zusatz bei der thermischen Depolymerisation von Polystyrol.

Der Übergang von einer Linear- zu einer Kreislaufwirtschaft ist angesichts von Klimawandel, Umweltverschmutzung, Bevölkerungswachstum und Ressourcenabhängigkeit sowohl ökologisch als auch ökonomisch erforderlich. In den 1980er und 1990er Jahren wurden bereits intensive Anstrengungen zur Entwicklung von Verfahren für die rohstoffliche Wiederverwertung von Kunststoffabfällen unternommen, wobei es aufgrund ungelöster verfahrenstechnischer Problemstellungen und aus wirtschaftlichen Gründen bisher nicht zu großtechnischen Anwendungen kam. Aufgrund des allgemein wachsenden Umweltbewusstseins und einem steigenden Bedarf an nachhaltigen Lösungen wächst allerdings auch das Interesse an chemischem Recycling.

Nicht alle thermoplastischen Polymere sind gleichermaßen für das chemische Recycling geeignet. Bei der thermischen Zersetzung von Polyolefinen oder Polyestern entstehen Gemische aus u.a. Wachsen, Leichtöl und Gasen. Der Abbau von Polyethylenterephthalat (PET) führt zu organischen Säuren, hauptsächlich Benzoesäure und Terephthalsäure, die korrosiv sind, und auch eine Verstopfung des Reaktors verursachen können (G. Grause et al., Feedstock recycling of waste polymeric material, in: Journal of Material Cycles and Waste Management, 13(4), 2011, 265-282).

Im Fall von Polystyrol und anderen Styrol-haltigen Polymeren ist es möglich, diese Polymere in ihre Grundbestandteile, insbesondere Styrol-Monomere, zu depolymerisieren, wodurch Polystyrol und andere Styrol-Monomer-haltige Polymere eine ausgezeichnete Wahl für das chemische Recycling bilden. Das resultierende Produktgemisch eines Depolymerisationsprozesses muss jedoch gereinigt werden, um die Komponenten als Rohmaterial für neue Zwecke, wie Polymerisationsprozesse, zu verwenden.

Wenn Polystyrol ausreichend thermisch behandelt wird, zersetzt es sich zu Styrol-Monomeren, aber eine unvollständige Zersetzung führt auch zur Bildung von z.B. Styrol-Dimeren, -Trimeren und anderen Oligomeren.

Wenn die Zersetzungsbedingungen zu harsch sind, können Nebenprodukte wie Benzol, Toluol, Ethylbenzol, Cumol und alpha-Methylstyrol gebildet werden. Die Mengen dieser Reaktionsprodukte variieren, sie hängen insbesondere von den Reaktionsbedingungen und den verwendeten Rohstoffen ab (s. C. Bouster et al., Study of the pyrolysis of polystyrenes: Kinetics of thermal decomposition, in: Journal of Analytical and Applied Pyrolysis, 1 (1980) 297-313 und C. Bouster et al., Evolution of the product yield with temperature and molecular weight in the pyrolysis of polystyrene, in: Journal of Analytical and Applied Pyrolysis 15 (1989) 249-259).

Die gewonnenen Styrol-Monomere können für ein neues Polymerisationsverfahren verwendet werden. Styrol-Oligomere können ggf. den Polymerisationsprozess stören, da sie bereits in geringen Mengen wichtige Eigenschaften des Polymers beeinflussen. Dies gilt auch für andere Nebenprodukte. Daher müssen die Styrol-Monomere von anderen Komponenten des Produktgemisches getrennt werden, um eine hohe Produktqualität zu gewährleisten.

Insbesondere andere aromatische Verbindungen als Styrol-Monomere können bei radikalischen Polymerisationsverfahren als Kettenübertragungsmittel wirken, die das durchschnittliche Molekulargewicht der hergestellten Polymere senken und zu Polymeren mit einer niedrigeren Glasübergangstemperatur (Tg) beitragen (DS Achilias et al., Chemical recycling of polystyrene by pyrolysis: Potential use of the liquid product for the reproduction of polymer, in: Macromolecular Materials and Engineering, 292(8) (2007), 923-934). Protonen von z.B. Carbonsäuren, Alkoholen, Aldehyden oder Ketonen wirken als Abbruchmittel bei anionischen Polymerisationsverfahren von Styrol (D. Baskaran et al., Anionic Vinyl Polymerization, in: Controlled and Living Polymerizations: From Mechanisms to Applications, John Wiley & Sons, 2009, 1-56).

In JP 2005132802 und JPH 11100875 (Toshiba Plant Systems) werden Verfahren zur Rückgewinnung von Styrol aus Polystyrol-Abfällen beschrieben, jedoch wird keine Lösung zur Trennung von Leichtsiedern, Styrol und Schwersiedern bereitgestellt.

Es besteht ein hoher Bedarf an einem Verfahren zur Herstellung von Styrol-Monomeren durch De-polymerisation von Styrol-(Co-)polymer-haltigen Polymermassen, das Styrol in sehr hoher Ausbeute liefert und dabei die Bildung von Styrol-Oligomeren möglichst gering hält, um den nachfolgenden Reinigungsprozess zu minimieren.

Es wurde überraschend gefunden, dass Polymermassen enthaltend bestimmte Copolymere von Styrol sich im Vergleich zu Polymermassen ohne diese Copolymere deutlich schneller bzw. besser depolymerisieren lassen.

Ein Gegenstand der Erfindung ist daher ein Verfahren zur Herstellung von Styrol-Monomeren durch Depolymerisation einer Styrol-Copolymer-haltigen Polymermasse, umfassend die Schritte:
a) Einbringen einer Polymermasse (A) enthaltend:
   I) 10 bis 100 Gew.-%, bezogen auf das Gesamtgewicht der Polymermasse (A), eines Styrol-Copolymers (I), umfassend
      la) 10 bis 99 Gew.-%, bezogen auf das Styrol-Copolymer (I), an Wiederholungseinheiten (la), die von Styrol stammen; und
      Ib) 1 bis 90 Gew.-%, bezogen auf das Styrol-Copolymer (I), an Wiederholungseinheiten (Ib), die von einem Monomer stammen, dessen Homopolymere eine Ceiling-Temperatur unter 350 °C aufweisen;
   II) optional 0 bis 90 Gew.-%, bezogen auf das Gesamtgewicht der Polymermasse (A), an Polystyrol (II),
   in die Reaktionszone (R) eines Pyrolysereaktors (P);
b) thermisches Spalten des in der Polymermasse (A) enthaltenen Styrol-Copolymers (I) und des gegebenenfalls in der Polymermasse (A) enthaltenen Polystyrols (II) in der Reaktionszone (R) des Pyrolysereaktors (P) bei einer Temperatur von 300 °C bis 1000 °C, vorzugsweise von 380 °C bis 700 °C, besonders vorzugsweise von 400 °C bis 650 °C, ganz besonders vorzugsweise von 450 °C bis 580 °C, um ein Produktgemisch (G), enthaltend Styrol-Monomere und weitere Komponenten zu erhalten;
c) Entnehmen des in Schritt b) erhaltenen Produktgemisches (G) aus der Reaktionszone (R) des Pyrolysereaktors (P);
d) Abkühlen des in Schritt c) entnommenen Produktgemisches (G), um ein kondensiertes Produktgemisch (G`), enthaltend Styrol-Monomere und weitere Komponenten, zu erhalten; und
e) Abtrennen der Styrol-Monomere von den weiteren Komponenten des in Schritt d) erhaltenen kondensierten Produktgemisches (G`).

Die thermische Zersetzung (Depolymerisation) des Polystyrols kann in jedem geeigneten Reaktor stattfinden, in dem die zur Zersetzung erforderliche Temperatur erreicht werden kann.

Beispielsweise kann der Pyrolysereaktor (P) ausgewählt sein aus der Gruppe bestehend aus Extrudern, Batchreaktoren, Drehrohren, Mikrowellenreaktoren, Rohrbündelreaktoren, Vortex-Reaktoren und Wirbelschichtreaktoren. Beispielsweise kann die thermische Zersetzung in einem Drehrohrofen durchgeführt werden. Drehrohröfen sind z.B. in EP-A 1481957 beschrieben. Die thermische Zersetzung kann auch in Extrudern stattfinden; diese sind z.B. in EP-A 1966291 beschrieben. Solche Reaktoren können mit oder ohne Gasstrom betrieben werden, etwa Trägergas oder Gas als Reaktionsmedium.

Der Pyrolysereaktor (P) kann demnach eine beliebige bekannte Art von Pyrolysereaktor sein, unter der Voraussetzung, dass der Aufbau des Pyrolysereaktors eine Einstellung der Temperatur in der Reaktionszone (R) des Pyrolysereaktors (P) ermöglicht.

In einer Ausführungsform ist die Verweilzeit (Z) der Polymermasse (A) in der Reaktionszone (R) des Pyrolysereaktors (P) von 0,01 s bis 50 s, oftmals 0,1 s bis 10 s bei einer Temperatur von 300 °C bis 1000 °C.

In einer bevorzugten Ausführungsform ist die Verweilzeit (Z) der Polymermasse (A) in der Reaktionszone (R) des Pyrolysereaktors (P) von 0,1 s bis 10 s, oftmals 0,1 s bis 5 s bei einer Temperatur von 380 °C bis 700 °C.

In einer besonders bevorzugten Ausführungsform ist die Verweilzeit (Z) der Polymermasse (A) in der Reaktionszone (R) des Pyrolysereaktors (P) von 0,2 s bis 5 s bei einer Temperatur von 400 °C bis 650 °C.

In einer ganz besonders bevorzugten Ausführungsform ist die Verweilzeit (Z) der Polymermasse (A) in der Reaktionszone (R) des Pyrolysereaktors (P) von 0,4 s bis 2 s bei einer Temperatur von 450 °C bis 630 °C.

Die Einstellung der Temperatur kann auf beliebige bekannte Art erfolgen, beispielsweise durch Mikrowelleneinstrahlung, mit Hilfe von Wärmetauschern, Gasbrennern, resistiven Heizleitern (Widerstandsheizung), oder durch Einleiten von überhitztem Gas, insbesondere Wasserdampf, jeweils allein oder in Kombination. In einer Ausführungsform erfolgt die Einstellung der Temperatur mit Hilfe von resistiven Heizleitern, die mit der Wand der Reaktionszone (R) des Pyrolysereaktors (P) in Kontakt stehen.

Alternativ kann die Einstellung der Temperatur mit Hilfe von Wasserdampf erfolgen, der durch Verdampfen von Wasser zur Verfügung gestellt und durch einen Dampfüberhitzer auf die gewünschte Temperatur gebracht wird. In einer Ausführungsform wird eine Kombination von resistiven Heizleitern, die mit der Wand der Reaktionszone (R) des Pyrolysereaktors (P) in Kontakt stehen, und Wasserdampf für die Einstellung der Temperatur in der Reaktionszone (R) des Pyrolysereaktors (P) verwendet.

In einer bevorzugten Ausführungsform ist der Pyrolysereaktor (P) ein Wirbelschichtreaktor, vorzugsweise umfassend eine SiC-Wirbelschicht in dessen Reaktionszone (R), wobei die Temperatur in der Reaktionszone (R) durch Einleiten von Wasserdampf der gewünschten Temperatur eingestellt wird. In dieser Ausführungsform wird der Wasserdampf durch einen Verdampfer zur Verfügung gestellt und über einen Dampfüberhitzer auf die gewünschte Temperatur gebracht. Ebenfalls wird in dieser Ausführungsform der Wasserdampf sowohl zum Einstellen der Temperatur in der Reaktionszone (R) als auch zur Erzeugung der Wirbelschicht verwendet. Optional kann bei dieser Ausführungsform die Heizenergie in der Reaktionszone (R) zusätzlich durch resistive Heizleiter, die mit der Wand der Reaktionszone (R) des Pyrolysereaktors (P) in Kontakt stehen, zur Verfügung gestellt werden.

Die Teilchengröße der Partikel und die Konzentration der Polymermasse (A) in der Reaktionszone (R) können an die spezifischen Gegebenheiten des Reaktors und seiner Konfiguration, an die Reaktionsbedingungen und an die Zusammensetzung der Polymermasse (A) angepasst werden.

Typischerweise hat die Polymermasse (A) eine Teilchengröße zwischen 100 µm und 50 mm, bevorzugt zwischen 250 µm und 5 mm, besonders bevorzugt zwischen 500 µm und 3 mm. Die Teilchen können eine sphärische oder eine nicht-sphärische Form aufweisen. Im Fall einer sphärischen Form wird die Partikelgröße durch Messung des volumenmittleren Durchmessers bestimmt. Im Fall von nicht-sphärischen Partikeln, beispielsweise nadelförmigen Partikeln, wird die längste Dimension zur Bestimmung der Partikelgröße herangezogen.

Die Konzentration des Reaktionsgutes im Reaktor hängt vom Reaktortyp, der Reaktorgröße und der Reaktorkonfiguration ab. Typischerweise liegt die Konzentration der Polymermasse (A) in der Reaktionszone (R) des Pyrolysereaktors (P) zwischen 1 und 50 Gew.-%, bevorzugt zwischen 1 und 25 Gew.-%, besonders bevorzugt zwischen 1 und 10 Gew.-%, ganz besonders bevorzugt zwischen 2 und 7 Gew.-%.

Bevorzugt wird die Polymermasse (A) in Schritt a) pneumatisch in die Reaktionszone (R) des Pyrolysereaktors (P) zugeführt, mit der Wirbelschicht aus Siliciumcarbid vermischt und schließlich in Schritt b) depolymerisiert. Besonders bevorzugt erfolgt die Zuführung der Polymermasse (A) in Schritt a) kontinuierlich.

Während der Verweilzeit (Z) in der Reaktionszone (R) des Pyrolysereaktors (P) wird die Polystyrol-Komponente und gegebenenfalls andere Polymere der Polymermasse (A) zumindest teilweise depolymerisiert (abgebaut), um ein Produktgemisch (G) enthaltend Styrol-Monomere und andere Komponenten zu ergeben.

Das Produktgemisch (G) enthaltend Styrol-Monomere und andere Komponenten wird in Schritt c) aus der Reaktionszone (R) des Pyrolysereaktors (P) entnommen. Bevorzugt findet die Entnahme kontinuierlich statt. Besonders bevorzugt wird das Produktgemisch (G) in gasförmigem Zustand aus dem oberen Bereich der Reaktionszone (R) des Pyrolysereaktors (P) kontinuierlich entnommen. Hierbei kann die Entnahme des Produktgemisches (G) beispielsweise durch Beförderung des Produktgemisches (G) aus der Reaktionszone (R) aufgrund des reaktionsbedingt erhöhten Drucks in der Reaktionszone (R) automatisch erfolgen.

Der Pyrolysereaktor kann eine Quensche enthalten oder mit einer Quensche verbunden sein. Unter Quensche wird in diesem Zusammenhang ein Bereich des Pyrolysereaktors verstanden, in dem die Depolymerisations-Reaktion schnell abgestoppt wird, bevorzugt durch Abkühlen des heißen Gases bestehend aus dem Produktgemisch (G) und inertem Gasstrom, beispielsweise Wasserdampf. Die Quensche dient unter anderem zur Stabilisierung der Reaktionsprodukte und zur Verhinderung oder Verminderung einer unerwünschten Re-Polymerisation. Typische Quenschen kühlen das Produktgemisch (G) von einer Temperatur von mehr als 300 °C auf eine Temperatur von unter 250 °C innerhalb eines sehr kurzen Zeitraums ab, bevorzugt innerhalb von weniger als 10 Sekunden, besonders bevorzugt innerhalb von weniger als 5 Sekunden, besonders bevorzugt innerhalb von weniger als 1 Sekunde. Quenschen sind z.B. beschrieben in EP-A 1966291.

Das Produktgemisch (G) wird nach der Entnahme aus der Reaktionszone (R) des Pyrolysereaktos (P) abgekühlt, wodurch eine Kondensation der Styrol-Monomere und weiterer Komponenten stattfindet und ein kondensiertes Produktgemisch (G`) enthaltend Styrol-Monomere und weitere Komponenten erhalten wird. Das Produktgemisch (G) wird auf eine Temperatur abgekühlt, die unter dem Kondensationspunkt von Styrol-Monomeren liegt.

Bevorzugt wird das Produktgemisch (G) auf eine Temperatur unter 70 °C, besonders bevorzugt unter 50 °C, ganz besonders bevorzugt unter 40 °C gekühlt. In einer bevorzugten Ausführungsform wird das Produktgemisch (G) auf eine Temperatur von 0 °C bis 70 °C gekühlt. In einer besonders bevorzugten Ausführungsform wird das Produktgemisch (G) auf eine Temperatur von 0 °C bis 50 °C gekühlt. In einer ganz besonders bevorzugten Ausführungsform wird das Produktgemisch (G) auf eine Temperatur von 15 °C bis 40 °C gekühlt.

Die Abkühlung kann auf eine beliebige bekannte Art und Weise erfolgen. Beispielsweise ist die Abkühlung an einer festen Oberfläche möglich, die durch Wasser oder Luft gekühlt wird. Ebenfalls ist die Abkühlung durch einen Wassernebel möglich, der direkt mit dem Produktgemisch (G) in Kontakt gebracht wird. Bevorzugt findet die Abkühlung in einem Wassernebel statt. Dabei werden die kondensierbaren Bestandteile des Produktgemischs (G) entsprechend ihren Dampfdrücken kondensiert und zusammen mit dem Wasser aufgefangen.

Bei der Kondensation wird ein kondensiertes Produktgemisch (G`) enthaltend Styrol-Monomere und weitere Bestandteile erhalten.

Im Falle der Abkühlung in einem Wassernebel wird das kondensierte Produktgemisch (G`) als zwei-Phasen-System mit dem Kühlwasser erhalten. In diesem Fall wird das kondensierte Produktgemisch (G`) als aufschwimmende organische Phase von der wässrigen Phase getrennt. Die wässrige Phase kann erneut gekühlt und als Wassernebel zum Abkühlen des Produktgemischs (G) eingesetzt werden.

Im weiteren Verlauf des Verfahrens wird beispielsweise das kondensierte Produktgemisch (G`) in Styrol-Monomere und weitere Bestandteile getrennt. Diese Trennung kann auf beliebige bekannte Weise durchgeführt werden, die geeignet ist, Mischungen aus flüssigen Produkten und gegebenenfalls Feststoffen in die Bestandteile aufzutrennen. Abhängig von den weiteren Bestandteilen neben Styrol-Monomeren können geeignete Methoden zum Trennen des kondensierten Produktgemischs (G`) in Styrol-Monomere und weitere Bestandteile beispielsweise Sedimentation, Zentrifugation, Filtration, Dekantieren, Destillation, Chromatographie, Kristallisation und Sublimation umfassen.

Sind in der kondensierten Produktmischung (G`) Feststoffe enthalten, ist es vorteilhaft, vor der Trennung der flüssigen Bestandteile die Feststoffe abzutrennen. In diesem Fall ist es bevorzugt, den Feststoff durch Sedimentation, Zentrifugation, Filtration, Destillation, Sublimation und/oder Dekantieren, bevorzugt durch Filtration, besonders bevorzugt durch Filtration mittels Fest-Flüssig-Filter von den flüssigen Bestandteilen abzutrennen.

Die weitere Auftrennung der flüssigen Bestandteile in Styrol-Monomere und weitere Bestandteile umfasst vorzugsweise mindestens einen Schritt der Destillation, wie zum Beispiel fraktionierende Destillation, mindestens einen Schritt der Chromatographie, wie zum Beispiel Säulenchromatographie, HPLC oder Flash-Chromatographie, und/oder mindestens einen Schritt der Kristallisation, wie zum Beispiel fraktionierende Kristallisation. Besonders vorzugsweise umfasst die Auftrennung der flüssigen Bestandteile mindestens einen Schritt der Destillation, ganz besonders vorzugsweise mindestens einen Schritt der fraktionierenden Destillation.

In einer bevorzugten Ausführungsform umfasst die Auftrennung der flüssigen Bestandteile in Styrol-Monomere und weitere Komponenten mindestens einen Schritt der fraktionierenden Destillation in einer oder mehreren Rektifikationskolonnen.

Häufig ist es vorteilhaft, zumindest einen Teil der weiteren Komponenten in die Reaktionszone (R) des Pyrolysereaktors (P) zurückzuführen. Dies ist insbesondere vorteilhaft, wenn ein Teil der weiteren Bestandteile Styrol-Oligomere wie z.B. Styrol-Dimere und Styrol-Trimere enthält. Dies ermöglicht eine insgesamt bessere Ausbeute an Styrol-Monomeren, da hierdurch auch die Depolymerisation der übrig gebliebenen Oligomere ermöglicht wird. Aus diesem Grund wird vorzugsweise zumindest ein Teil der weiteren Komponenten des kondensierten Produktgemischs (G`), die von Styrol-Monomeren abgetrennt wurden, in die Reaktionszone (R) des Pyrolysereaktors (P) rückzuführen. Besonders bevorzugt ist hierbei eine kontinuierliche Rückführung der weiteren Komponenten.

In einer bevorzugten Ausführungsform bestehen die weiteren Komponenten, die in die Reaktionszone (R) des Pyrolysereaktors (P) zurückgeführt werden, im Wesentlichen aus Styrol-Oligomeren, vorzugsweise aus Styrol-Dimeren und Styrol-Trimeren. In diesem Zusammenhang bedeutet "im Wesentlichen", dass die weiteren Komponenten, die in die Reaktionszone (R) des Pyrolysereaktors (P) zurückgeführt werden, neben Styrol-Oligomeren keine weiteren Komponenten enthalten, die den Depolymerisationsprozess in der Reaktionszone (R) des Pyrolysereaktors (P) stören. Die übrigen Bestandteile, die nicht in die Reaktionszone (R) des Pyrolysereakturs (P) zurückgeführt werden, umfassen üblicherweise die Monomere, von denen die Wiederholungseinheiten (Ib) stammen, vorzugsweise Methylmethacrylat und/oder alpha-Methylstyrol.

Die bei dem erfindungsgemäßen Verfahren eingesetzte Polymermasse (A) enthält insbesondere:
I) 10 bis 100 Gew.-%, vorzugsweise 30 bis 100 Gew.-%, besonders vorzugsweise 50 bis 100 Gew.-%, ganz besonders vorzugsweise 70 bis 90 Gew.-%, bezogen auf das Gesamtgewicht der Polymermasse (A), mindestens eines Styrol-Copolymers (I)
II) optional 0 bis 90 Gew.-%, vorzugsweise 0 bis 70 Gew.-%, besonders vorzugsweise 0 bis 50 Gew.-%, ganz besonders vorzugsweise 0 bis 30 Gew.-%, bezogen auf das Gesamtgewicht der Polymermasse (A), an Polystyrol (II).

Oftmals ist die Untergrenze an Polystyrol 1 Gew.-%, 5 Gew.-% oder 10 Gew.-%.

Wenn Polystyrol (II) in der Polymermasse (A) enthalten ist, besteht das Polystyrol (II) aus GPPS (general purpose polystyrene) und/oder HIPS (high impact polystyrene).

Bei dem Styrol-Copolymer (I) handelt es sich um ein Copolymer umfassend
la) 10 bis 99 Gew.-%, vorzugsweise 50 bis 99 Gew.-%, besonders vorzugsweise 70 bis 98 Gew.-%, ganz besonders vorzugsweise 70 bis 85 Gew.-%, bezogen auf das Styrol-Copolymer (I), an Styrol; und
Ib) 1 bis 90 Gew.-%, vorzugsweise 1 bis 50 Gew.-%, besonders vorzugsweise 2 bis 30 Gew.-%, ganz besonders vorzugsweise 15 bis 30 Gew.-%, bezogen auf das Styrol-Copolymer (I), an Wiederholungseinheiten (Ib), die von einem Monomer stammen, dessen Homopolymere eine Ceiling-Temperatur unter 350 °C, vorzugsweise unter 300 °C aufweisen
Ic) 0 bis 10 Gew.-%, vorzugsweise 0 bis 5 Gew,-%, besonders bevorzugt 0 bis 3 Gew.-% weitere copolymerisierbare Monomere, ausgewählt beispielsweise aus, aber nicht beschränkt auf Maleinsäureanhydrid, n-Phenylmaleinimid, Paramethylstyrol, (Meth)acrylnitril, Alkylacrylat.

Bei der Ceiling-Temperatur handelt es sich um die Temperatur, bei der die Geschwindigkeit der Polymerisation gleich der Geschwindigkeit der Depolymerisation ist. Bei Polyethylen beträgt diese Ceiling-Temperatur (T_{c}) ca. 883 K (610 °C), bei Polystyrol ca. 669 K (396 °C).

Die Wiederholungseinheiten (Ib), die in dem Styrol-Copolymer (I) enthalten sind, können im Allgemeinen Wiederholungseinheiten sein, die von einem beliebigen Monomer stammen, dessen Homopolymere eine Ceiling-Temperatur unter 350 °C aufweisen, sofern die Monomere eine polymerisierbare ungesättigte aliphatische Gruppe haben. Vorzugsweise stammen die Wiederholungseinheiten (Ib) von Methylmethacrylat und/oder alpha-Methylstyrol, besonders vorzugsweise von Methylmethacrylat. Wenn von alpha-Methylstyrol stammende Wiederholungseinheiten (Ib) in dem Styrol-Copolymer (I) enthalten sind, ist der Anteil an alpha-Methylstyrol in dem Styrol-Copolymer vorzugsweise von 1 bis 55 Gew.-%, besonders vorzugsweise von 1 bis 30 Gew.-%, bezogen auf das Styrol-Copolymer (I).

Neben dem Styrol-Copolymer (I) und gegebenenfalls dem Polystyrol (II) kann die Polymermasse (A) zusätzlich weitere Komponenten enthalten. Diese können sowohl weitere polymere Komponenten als auch nicht-polymere Komponenten sein.

Sind neben dem Styrol-Copolymer (I) und gegebenenfalls dem Polystyrol (II) kann die Polymermasse (A) zusätzlich weitere Komponenten enthalten, umfasst die Polymermasse (A)
III) höchstens 30 Gew.-%, vorzugsweise höchstens 20 Gew.-%, besonders vorzugsweise höchstens 10 Gew.-%, bezogen auf das Gesamtgewicht der Polymermasse (A), an Polyolefinen (III);
IV) höchstens 4,9 Gew.-%, vorzugsweise höchstens 2 Gew.-%, besonders vorzugsweise höchstens 1 Gew.-%, bezogen auf das Gesamtgewicht der Polymermasse (A), an Acrylnitril-basierten Polymeren (IV); und
V) höchstens 4,9 Gew.-%, vorzugsweise höchstens 2 Gew.-%, besonders vorzugsweise höchstens 1 Gew.-%, bezogen auf das Gesamtgewicht der Polymermasse (A), an Polyestern (V).

Als Polyolefin (III), wenn vorhanden, kommen beliebige Polyolefine in Frage, beispielsweise Polyethylen- oder Polypropylen-Derivate wie PE-LD (Low Density Polyethylen), PE-LLD (Linear Low Density Polyethylen), PE-HD (High Density Polyethylen), Metallocen-Polyethylene, Ethylen-Copolymere wie Poly(ethylen-co-vinylacetat), Ethylen-Buten, Ethylen-Hexen, Ethylen-Octen-Copolymere, sowie Cycloolefincopolymere, Homo- oder Copolymere des Propylens, Metallocen-katalysierte Polypropylene sowie Copolymere des Propylens mit anderen, dem Fachmann bekannten Comonomeren, und Mischungen davon. Bevorzugte Polyolefine (II) sind Homopolymeren von Ethylen, Homopolymeren von Propylen, Copolymeren von Ethylen und Propylen und Mischungen davon.

Als Acrylnitril-basiertes Polymer (IV), wenn vorhanden, kommen beliebige Acrylnitril-basierte Polymere in Frage, beispielsweise Styrol-Acrylnitril-Copolymere (SAN), α-Methylstyrol-Acrylnitril-Copolymere (AMSAN), Styrol-Acrylnitril-Maleinsäureanhydrid-Copolymere, Styrol-Acrylnitril-Phenylmaleinimid-Copolymere, und deren Pfropfcopolymere mit kautschukartigen Polymeren, z.B. Acrylnitril-Butadien-Styrol-Pfropfcopolymere (ABS), Acrylnitril-Styrol-Alkyl(meth)acrylat-Pfropfcopolymere (ASA), α-Methylstyrol-Acrylnitril-Methyl-methacrylat-Copolymere, α-Methylstyrol-Acrylnitril-t-Butylmethacrylat-Copolymere und Styrol-Acrylnitril-t-Butylmethacrylat-Copolymere.

Bevorzugte Acrylnitril-basierte Polymere (IV), wenn vorhanden sind Styrol-Acrylnitril-Copolymere (SAN), Acrylnitril-Styrol-Alkylacrylat-Pfropfcopolymere (ASA) und Acrylnitril-Butadien-Styrol-Pfropfcopolymere (ABS).

Als Polyester (V), wenn vorhanden, kommen beliebige Polyester in Frage, beispielsweise Polykondensationsprodukte von Dicarbonsäuren enthaltend 4 bis 16 Kohlenstoffatome mit Diolen enthaltend 2 bis 8 Kolenstoffatome oder Polykondensationsprodukte von Hydroxycarbonsäuren enthaltend 2 bis 6 Kohlenstoffatome. Hierzu gehören unter anderem Polyalkylenadipate, wie Polyethylenadipat und Polybutylenadipat, Polyalkylenterephthalate, wie Polyethylenterephthalat und Polybutylenterephthalat, Polymilchsäure, Polyhydroxybutyrate, Polycaprolactone und Polyvalerolactone. Bevorzugte Polyester (IV), wenn vorhanden, sind Polyethylenterephthalat (PET) und Polybutylenterephthalat (PBT), insbesondere Polyethylenterephthalat.

In einer besonders bevorzugten Ausführungsform enthält die Polymermasse (A) in Summe höchstens 2 Gew.-%, bezogen auf das Gesamtgewicht der Polymermasse (A), an Acrylnitril-basiertem Polymer (IV) und Polyester (V).

In einer ganz besonders bevorzugten Ausführungsform enthält die Polymermasse (A) in Summe höchstens 1 Gew.-%, bezogen auf das Gesamtgewicht der Polymermasse (A), an Acrylnitril-basiertem Polymer (IV) und Polyester (V).

Vorzugsweise enthält die Polymermasse (A) keine anderen polymeren Komponenten als das Styrol-Copolymer (I), Polystyrol (II), Polyolefin (III) Acrylnitril-basierte Polymer (IV) und/oder Polyester (V).

Besonders vorzugsweise enthält die Polymermasse (A) neben dem Styrol-Copolymer (I) und gegebenenfalls Polystyrol (II) keine weiteren polymeren Komponenten.

Des Weiteren kann die Polymermasse (A) bis zu 30 Gew.-%, bezogen auf das Gesamtgewicht der Polymermasse (A), an Additiv(en) enthalten.

Bevorzugt enthält die Polymermasse (A) bis zu 10 Gew.-%, insbesondere 0,3 bis 8 Gew.-%, besonders vorzugsweise bis zu 4 Gew.-%, insbesondere 0,3 bis 4 Gew.-%, bezogen auf das Gesamtgewicht der Polymermasse (A), an Additiv(en).

Als Additive in der Polymermasse (A) können übliche Kunststoffadditive und -Hilfsstoffe enthalten sein. Beispielshaft kann ein Additiv oder ein Hilfsstoff ausgewählt sein aus der Gruppe bestehend aus Antioxidantien, UV-Stabilisatoren, Peroxidzerstörern, Antistatika, Gleitmitteln, Entformungsmitteln, Flammschutzmitteln, Füll- oder Verstärkerstoffen (Glasfasern, Kohlefasern, etc.), Farbmitteln und Kombinationen aus zwei oder mehr daraus.

Als Beispiele für Oxidationsverzögerer und Wärmestabilisatoren seien Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gesamtgewicht der Polymermasse (A) genannt.

Als UV-Stabilisatoren, die im Allgemeinen in Mengen bis zu 2 Gew.-%, bezogen auf das Gesamtgewicht der Polymermasse (A) enthalten sind, seien verschiedene substituierte Resorcine, Salicylate, Benzotriazole und Benzophenone genannt.

Weiterhin können organische Farbstoffe wie Nigrosin, Pigmente wie Titandioxid, Phthalocyanine, Ultramarinblau und Ruß als Farbstoffe in der Polymermasse (A) enthalten sein, sowie faser- und pulverförmige Füllstoffe und Verstärkungsmittel. Beispiele für letztere sind Kohlenstoffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat.

Als Keimbildungsmittel können z.B. Talkum, Calciumfluorid, Natriumphenylphosphinat, Aluminiumoxid, Siliciumdioxid und Nylon 22 enthalten sein.

Gleit- und Entformungsmittel, welche in der Regel in Mengen bis zu 1 Gew.-%, bezogen auf das Gesamtgewicht der Polymermasse (A), eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid).

Weiterhin können Antiblockmittel auf mineralischer Basis in Mengen bis zu 0,1 Gew.-%, bezogen auf das Gesamtgewicht der Polymermasse (A), enthalten sein. Als Beispiele seien amorphe oder kristalline Kieselsäure, Calciumcarbonat oder Aluminiumsilikat genannt.

Als Verarbeitungshilfsmittel kann beispielsweise Mineralöl, vorzugsweise medizinisches Weißöl, in Mengen bis zu 5 Gew.-%, vorzugsweise bis zu 2 Gew.-%, insbesondere 0,1 bis 2 Gew.-%, bezogen auf das Gesamtgewicht der Polymermasse (A), enthalten sein.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Weiterhin können alle für die jeweiligen Thermoplaste bekannten Flammschutzmittel enthalten sein, insbesondere solche auf Basis von Phosphorverbindungen.

Weiterhin können noch Feuchtigkeit und/oder weitere anorganische und/oder organische Fremdbestandteile, wie z.B. Nahrungsmittelrückstände, enthalten sein.

Gegenstand der Erfindung ist auch eine thermoplastische Formmasse, geeignet für ein Recycling durch thermische Depolymerisation, bestehend aus
I) 10 bis 100 Gew.-%, bezogen auf Gesamtgewicht der Polymermasse (A), mindestens eines Styrol-Copolymers (I), umfassend
   la) 10 bis 99 Gew.-%, bezogen auf Styrol-Copolymer (I), an Wiederholungseinheiten (la), die von Styrol stammen; und
   Ib) 1 bis 90 Gew.-%, bezogen auf Styrol-Copolymer (I), an Wiederholungseinheiten (Ib);
   Ic) 0 bis 10 Gew.-%, vorzugsweise 0 bis 5 Gew,-%, besonders bevorzugt 0 bis 3 Gew.-% weiterer copolymerisierbarer Monomere, insbesondere ausgewählt aus der Gruppe Maleinsäureanhydrid, n-Phenylmaleinimid, Paramethylstyrol, (Meth)acrylnitril und Alkylacrylat,
II) optional 0 bis 90 Gew.-%, bezogen auf das Gesamtgewicht der Polymermasse (A), an Polystyrol (II), wobei
die Ceiling-Temperatur des Homopolymers aus (Ib) mindestens 50 K unterhalb der Ceiling-Temperatur des Homopolymers aus dem Monomer (la) liegt.

Die oben für das Verfahren beschriebenen bevorzugten Varianten sind auch für die thermoplastische Formmasse entsprechend anwendbar.

Die erfindungsgemäß eingesetzte Polymermasse (A) kann gegebenenfalls in geeigneter Weise vorbehandelt werden, um beispielsweise anhaftende Verunreinigungen wie etwa Lebensmittelreste oder Schmutz, Feuchtigkeit und Fremdstoffe wie Metalle oder andere Stoffe und Verbundmaterialien zu entfernen.

Dies erfolgt vorteilhaft in einer Vorbehandlung, die einen oder mehrere der folgenden Schritte umfassen kann, wobei die Reihenfolge der Schritte nicht festgelegt ist und Schritte auch mehrfach wiederholt werden können: manuelle Störstoffsortierung, Wäsche, Zerkleinerung, automatische Sortierung in geeigneten Anlagen. Gegebenenfalls können auch Polymermassen, die der Polymermasse (A) nicht entsprechen, durch ein solches Verfahren in eine erfindungsgemäß eingesetzte Polymermasse (A) umgewandelt werden.

Bevorzugt ist daher auch eine Ausführungsform des erfindungsgemäßen Verfahrens, bei der eine Polymermasse, die der Polymermasse (A) nicht entspricht, einer Vorbehandlung unterworfen wird, die einen oder mehrere der folgenden Schritte umfasst, wobei die Reihenfolge der Schritte nicht festgelegt ist und Schritte auch mehrfach wiederholt werden können: manuelle Störstoffsortierung, Wäsche, Zerkleinerung, automatische Sortierung in geeigneten Anlagen, um so die Polymermasse (A) zu erhalten.

Ein weiterer Gegenstand der Erfindung ist eine Vorrichtung zur Durchführung eines Verfahrens zur Herstellung von Styrol-Monomeren aus einer Styrol-Copolymer-haltigen Polymermasse wie oben beschrieben, bei der die Reaktionszone (R) und der Pyrolysereaktor (P) in der Vorrichtung so gestaltet sind, dass eine schonende Depolymerisation von Styrol-Copolymer und (gegebenenfalls) Polystyrol erfolgen kann.

Vorzugsweise umfasst die Vorrichtung einen Pyrolysereaktor (P) mit einer Reaktionszone (R), mindestens ein Heizelement zum Einstellen der gewünschten Temperaturen, mindestens eine Leitung zum Einführen der Polymermasse (A) in die Reaktionszone (R) und zum Einstellen der Verweilzeit (Z), sowie eine Quensche zum Abkühlen des Produktgemischs (G).

Besonders vorzugsweise umfasst die Vorrichtung als Pyrolysereaktor (P) einen Wirbelschichtreaktor, besonders vorzugsweise einen Wirbelschichtreaktor umfassend eine Wirbelschicht aus Siliciumcarbid (SiC) in der Reaktionszone (R), wobei das Siliciumcarbid bevorzugt eine gewichtsmittleren Partikelgröße von 20 bis 1500 µm, besonders bevorzugt 50 bis 1000 µm aufweist, optional resistive Heizleiter an den Außenwänden der Reaktionszone (R), einen Verdampfer zum Erzeugen von Wasserdampf, einen Dampfüberhitzer zum Einstellen der gewünschten Dampftemperatur, eine Leitung zum Einführen des Dampfs in die Reaktionszone (R) sowie eine Quensche zum Abkühlen des Produktgemischs (G).

Ein weiterer Gegenstand der Erfindung ist die Verwendung eines Styrol-Copolymers (I) wie oben beschrieben, umfassend:
la) 10 bis 99 Gew.-%, bezogen auf das Styrol-Copolymer (I), an Wiederholungseinheiten (la), die von Styrol stammen; und
Ib) 1 bis 90 Gew.-%, bezogen auf das Styrol-Copolymer (I), an Wiederholungseinheiten (Ib), die von einem Monomer stammen, dessen Homopolymere eine Ceiling-Temperatur unter 350 °C aufweisen,
zur Herstellung von Styrol-Monomeren durch thermische Depolymerisation.

Hierbei stammen die Wiederholungseinheiten (Ib) vorzugsweise von Methylmethacrylat oder alpha-Methylstyrol, besonders vorzugsweise von Methylmethacrylat.

Außerdem ist Gegenstand der Erfindung auch die Verwendung von Styrol-Copolymeren) (I) umfassend:
la) 10 bis 99 Gew.-%, bezogen auf das Styrol-Copolymer (I), an Wiederholungseinheiten (la), die von Styrol stammen; und
Ib) 1 bis 90 Gew.-%, bezogen auf das Styrol-Copolymer (I), an Wiederholungseinheiten (Ib), die von einem Monomer stammen, dessen Homopolymere eine Ceiling-Temperatur unter 350 °C aufweisen,
als Zusatz bei der thermischen Depolymerisation von Polystyrol.

Aspekte der Erfindung sind im Folgenden beschrieben.

Aspekt 1: Thermoplastische Formmasse, geeignet für ein Recycling durch thermische Depolymerisation, bestehend aus
I) 10 bis 100 Gew.-%, bezogen auf Gesamtgewicht der Polymermasse (A), mindestens eines Styrol-Copolymers (I), umfassend
   la) 10 bis 99 Gew.-%, bezogen auf Styrol-Copolymer (I), an Wiederholungseinheiten (la), die von Styrol stammen; und
   lb) 1 bis 90 Gew.-%, bezogen auf Styrol-Copolymer (I), an Wiederholungseinheiten (Ib);
   Ic) 0 bis 10 Gew.-%, vorzugsweise 0 bis 5 Gew,-%, besonders bevorzugt 0 bis 3 Gew.-% weiterer copolymerisierbarer Monomere, insbesondere ausgewählt aus der Gruppe Maleinsäureanhydrid, n-Phenylmaleinimid, Paramethylstyrol, (Meth)acrylnitril und Alkylacrylat,
II) optional 0 bis 90 Gew.-%, bezogen auf das Gesamtgewicht der Polymermasse (A), an Polystyrol (II), wobei
die Ceiling-Temperatur des Homopolymers aus (Ib) mindestens 50 K unterhalb der Ceiling-Temperatur des Homopolymers aus dem Monomer (la) liegt.

Aspekt 2: Verfahren zur Herstellung von Styrol-Monomeren durch Depolymerisation einer Styrol-Copolymer haltigen Polymermasse, umfassend die Schritte:
a) Einbringen einer Polymermasse (A) enthaltend:
   I) 10 bis 100 Gew.-%, bezogen auf das Gesamtgewicht der Polymermasse (A), mindestens eines Styrol-Copolymers (I), umfassend
      la) 10 bis 99 Gew.-%, bezogen auf Styrol-Copolymer (I), an Wiederholungseinheiten (la), die von Styrol stammen; und
      lb) 1 bis 90 Gew.-%, bezogen auf Styrol-Copolymer (I), an Wiederholungseinheiten (Ib), die von einem Monomer stammen, dessen Homopolymere eine Ceiling-Temperatur unter 350 °C aufweisen;
   II) optional 0 bis 90 Gew.-%, bezogen auf das Gesamtgewicht der Polymermasse (A), an Polystyrol (II),
   in die Reaktionszone (R) eines Pyrolysereaktors (P);
b) Thermisches Spalten des in der Polymermasse (A) enthaltenen Styrol-Copolymers (I) und des ggf. in der Polymermasse (A) enthaltenen Polystyrols (II) in der Reaktionszone (R) des Pyrolysereaktors (P) bei einer Temperatur von 300 °C bis 1000 °C, um ein Produktgemisch (G), enthaltend Styrol-Monomere und weitere Komponenten zu erhalten;
c) Entnehmen des in Schritt b) erhaltenen Produktgemisches (G) aus der Reaktionszone (R) des Pyrolysereaktors (P);
d) Abkühlen des in Schritt c) entnommenen Produktgemisches (G), um ein kondensiertes Produktgemisch (G`), enthaltend Styrol-Monomere und weitere Komponenten, zu erhalten; und
e) Abtrennen der Styrol-Monomere von den weiteren Komponenten des in Schritt d) erhaltenen kondensierten Produktgemisches (G`).

Aspekt 3: Verfahren gemäß Aspekt 2, wobei die mittlere Verweilzeit (Z) der Polymermasse (A) in der Reaktionszone (R) des Pyrolysereaktors (P) von 0,01 s bis 50 s beträgt.

Aspekt 4: Verfahren gemäß Aspekt 2 oder 3, wobei die Polymermasse (A) neben dem mindestens einen Styrol-Copolymer (I) enthält:
!!!) höchstens 30 Gew.-%, bezogen auf das Gesamtgewicht der Polymermasse (A), an Polyolefinen (III);
IV) höchstens 4,9 Gew.-%, bezogen auf das Gesamtgewicht der Polymermasse (A), an Acrylnitril-basierten (Co)-Polymeren (IV); und
V) höchstens 4,9 Gew.-%, bezogen auf das Gesamtgewicht der Polymermasse (A), an Polyestern (V).

Aspekt 5: Verfahren gemäß einem der Aspekte 2 bis 4, wobei die Temperatur in der Reaktionszone (R) des Pyrolysereaktors (P) 400 °C bis 630 °C beträgt und die mittlere Verweilzeit (Z) der Polymermasse (A) in der Reaktionszone des Pyrolysereaktors 0,1 s bis 10 s beträgt.

Aspekt 6: Verfahren gemäß einem der Aspekte 2 bis 5, wobei Styrol-Copolymer (I) enthält:
la) 70 bis 98 Gew.-%, bezogen auf Styrol-Copolymer (I), an Wiederholungseinheiten (la), die von Styrol stammen; und
lb) 2 bis 30 Gew.-%, bezogen auf Styrol-Copolymer (I), an Wiederholungseinheiten (Ib), die von einem Monomer stammen, dessen Homopolymere eine Ceiling Temperatur unter 350 °C aufweisen
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe aus Maleinsäureanhydrid, n-Phenylmaleinimid, Paramethylstyrol, (Meth)-acrylnitril und Alkylacrylat.

Aspekt 7: Verfahren gemäß einem der Aspekte 2 bis 6, wobei die Wiederholungseinheiten (Ib) von Methylmethacrylat und/oder alpha-Methylstyrol, bevorzugt von Methylmethacrylat stammen.

Aspekt 8: Verfahren gemäß einem der Aspekte 2 bis 7, wobei der Pyrolysereaktor (P) ein Wirbelschichtreaktor ist, bevorzugt umfassend eine Siliciumcarbid-Wirbelschicht in der Reaktionszone (R).

Aspekt 9: Verfahren gemäß einem der Aspekte 2 bis 8, wobei zumindest ein Teil der in Schritt e) erhaltenen weiteren Komponenten in die Reaktionszone (R) des Pyrolysereaktors (P) zurückgeführt wird, vorzugsweise kontinuierlich in die Reaktionszone (R) zurückgeführt wird.

Aspekt 10: Verfahren gemäß einem der Aspekte 2 bis 9, wobei die im Schritt e) erhaltenen weiteren Komponenten, die in die Reaktionszone (R) des Pyrolysereaktors (P) zurückgeführt werden, im Wesentlichen aus Styrol-Oligomeren bestehen.

Aspekt 11: Verfahren gemäß einem der Aspekte 2 bis 10, wobei in Schritt d) das in Schritt c) entnommene Produktgemisch (G) auf eine Temperatur von 0 °C bis 50 °C gekühlt wird.

Aspekt 12: Verfahren gemäß einem der Aspekte 2 bis 11, bei dem das Abtrennen der Styrol-Monomere in Schritt e) den Schritt mindestens einer fraktionierenden Destillation umfasst.

Aspekt 13: Vorrichtung zur Durchführung eines Verfahrens zur Herstellung von Styrol-Monomeren aus einer Styrol-Copolymer haltigen Polymermasse gemäß einem der Aspekte 2 bis 12, bei der die Reaktionszone (R) und der Pyrolysereaktor (P) in der Vorrichtung so gestaltet sind, dass eine schonende Depolymerisation von Styrol-Copolymer und gegebenenfalls Polystyrol erfolgen kann.

Aspekt 14: Verwendung eines Styrol-Copolymers (I) umfassend:
la) 10 bis 99 Gew.-%, bezogen auf Styrol-Copolymer (I), an Wiederholungseinheiten (la), die von Styrol stammen; und
lb) 1 bis 90 Gew.-%, bezogen auf Styrol-Copolymer (I), an Wiederholungseinheiten (Ib), die von einem Monomer stammen, dessen Homopolymere eine Ceiling Temperatur unter 350 °C aufweisen,
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe Maleinsäureanhydrid, n-Phenylmaleinimid, Paramethylstyrol, (Meth)acrylnitril, und Alkylacrylat,
zur Herstellung von Styrol-Monomeren durch thermische Depolymerisation.

Aspekt 15: Verwendung gemäß Aspekt 14, wobei die Wiederholungseinheiten (Ib) von Methylmethacrylat und/oder alpha-Methylstyrol, bevorzugt von Methylmethacrylat stammen.

Aspekt 16: Verwendung von Styrol-Copolymer (I) umfassend:
la) 10 bis 99 Gew.-%, bezogen auf Styrol-Copolymer (I), an Wiederholungseinheiten (la), die von Styrol stammen; und
lb) 1 bis 90 Gew.-%, bezogen auf Styrol-Copolymer (I), an Wiederholungseinheiten (Ib), die von einem Monomer stammen, dessen Homopolymere eine Ceiling Temperatur unter 350 °C aufweisen,
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe Maleinsäureanhydrid, n-Phenylmaleinimid, Paramethylstyrol, (Meth)acrylnitril, Alkylacrylat,
als Zusatz bei der thermischen Depolymerisation von Polystyrol.

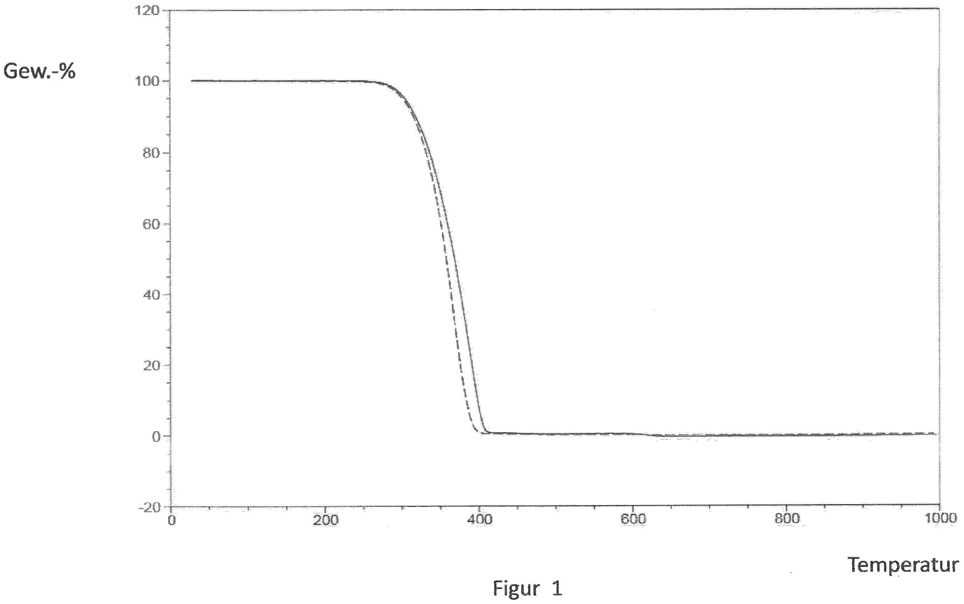

Die Erfindung wird durch die folgenden Beispiele, die Figur 1 und Ansprüche illustriert.

### Vergleichsbeispiel 1

In einer Vorrichtung für thermogravimetrische Analysen wurde unter Stickstoffatmosphäre und bei einer Aufheizrate von 20K/min reines Polystyrol (GPPS) mit einem gewichtsmittleren Molekulargewicht von 250 000 g/mol und einem zahlenmittleren Molekulargewicht von 100 000 g/mol (gemessen mittels Gelpermeationschromatographie mit Polystyrol als Standard) untersucht. Die Gewichtsveränderung (%) im Verlauf der Analyse ist in Figur 1 gegen die Temperatur (°C) dargestellt (Beispiel 1: gestrichelte Linie, Vergleichsbeispiel 1: durchgezogene Linie). Die Zusammensetzung der Depolymerisations-Produkte aus dem Polystyrol ist in Tabelle 1 gezeigt.

### Beispiel 1

In einer Vorrichtung für thermogravimetrische Analysen wurde unter StickstoffAtmosphäre und bei einer Aufheizrate von 20K/min ein Copolymer aus Styrol und Methylmethacrylat (Gewichtsverhältnis S:MMA von 70:30, hergestellt durch radikalische Polymerisation) untersucht. Ein typisches Polymethylmethacrylat hat eine Ceiling-Temperatur von ca. 475 K (202 °C).

Die Gewichtsveränderung im Verlauf der Analyse ist in Figur 1 dargestellt.

Die jeweilige Zusammensetzung (Gew.-%) der Depolymerisations-Produkte ist in Tabelle 1 gezeigt.

**Tabelle 1**

| | Styrol-Monomer | Styrol-Dimer | Styrol-Trimer | Alpha-Methylstyrol | Methylmethacrylat | Sonst. |
|---|---|---|---|---|---|---|
| Vergleichsbeispiel 1 | 50 | 15 | 10 | 5 | 0 | 20 |
| Beispiel 1 | 50 | 5 | 5 | 5 | 25 | 10 |

Anhand der Ergebnisse ist deutlich zu erkennen, dass die Ausbeute an Styrol trotz des geringeren Anteils an Styrol-Monomeren in dem Copolymer gemäß Beispiel 1 genauso hoch ist wie bei reinem GPPS (Vergleichsbeispiel 1).

Gleichzeitig ist der Anteil an Styrol-Dimeren und Styrol-Trimeren, sowie sonstiger Bestandteile bei der Depolymerisation des Styrol-Methylmethacrylat-Copolymers geringer, und die Depolymerisation läuft bereits bei niedrigeren Temperaturen ab.

Analoge Pyrolysen können mit Mischungen aus z.B. 60 Gew.-% Polystyrol (GPPS) und 40 Gew.-% Copolymer aus Styrol und Methylmethacrylat (S:MMA 70:30), bzw. mit Mischungen enthaltend z.B. 90 Gew.-% Polystyrol (GPPS), 4,5 Gew.-% Copolymer aus alpha-Methyl-Styrol und Acrylnitril (AMSAN), sowie 5,5 Gew.-% Polyethylen (PE) durchgeführt werden.

Das erfindungsgemäße Verfahren zur Herstellung von Styrol-Monomeren durch Depolymerisation einer Styrol-(Co-)polymer-haltigen Polymermasse ermöglicht es demnach, den wichtigen Rohstoff Styrol in sehr hoher Ausbeute bei einfachem Abbau zu liefern und dabei die Bildung von Styrol-Oligomeren möglichst gering zu halten. Dadurch kann die Aufarbeitung und nachfolgende Reinigungsprozesse vereinfacht werden.

## Patentansprüche

1. Verfahren zur Herstellung von Styrol-Monomeren durch Depolymerisation einer Styrol-Copolymer haltigen Polymermasse, umfassend die Schritte:
a) Einbringen einer Polymermasse (A) enthaltend:
I) 10 bis 100 Gew.-%, bezogen auf das Gesamtgewicht der Polymermasse (A), mindestens eines Styrol-Copolymers (I), umfassend
la) 10 bis 99 Gew.-%, bezogen auf Styrol-Copolymer (I), an Wiederholungseinheiten (la), die von Styrol stammen; und
lb) 1 bis 90 Gew.-%, bezogen auf Styrol-Copolymer (I), an Wiederholungseinheiten (Ib), die von einem Monomer stammen, dessen Homopolymere eine Ceiling-Temperatur unter 350 °C aufweisen;
II) optional 0 bis 90 Gew.-%, bezogen auf das Gesamtgewicht der Polymermasse (A), an Polystyrol (II),
in die Reaktionszone (R) eines Pyrolysereaktors (P);
b) Thermisches Spalten des in der Polymermasse (A) enthaltenen Styrol-Copolymers (I) und des ggf. in der Polymermasse (A) enthaltenen Polystyrols (II) in der Reaktionszone (R) des Pyrolysereaktors (P) bei einer Temperatur von 300 °C bis 1000 °C, um ein Produktgemisch (G), enthaltend Styrol-Monomere und weitere Komponenten zu erhalten;
c) Entnehmen des in Schritt b) erhaltenen Produktgemisches (G) aus der Reaktionszone (R) des Pyrolysereaktors (P);
d) Abkühlen des in Schritt c) entnommenen Produktgemisches (G), um ein kondensiertes Produktgemisch (G`), enthaltend Styrol-Monomere und weitere Komponenten, zu erhalten; und
e) Abtrennen der Styrol-Monomere von den weiteren Komponenten des in Schritt d) erhaltenen kondensierten Produktgemisches (G`).

2. Verfahren gemäß Anspruch 1 zur Herstellung von Styrol-Monomeren durch Depolymerisation der thermoplastischen Polymermasse (A), wobei die Depolymerisation der Polymermasse (A) bei einer geringeren Temperatur durchgeführt wird, als eine Depolymerisation von reinem Polystyrol (GPPS), die unter sonst gleichen Bedingungen die gleiche Ausbeute an Styrol-Monomeren liefert.

3. Verfahren gemäß Anspruch 1 oder 2, wobei die mittlere Verweilzeit (Z) der Polymermasse (A) in der Reaktionszone (R) des Pyrolysereaktors (P) von 0,1 s bis 5 s bei einer Temperatur von 380 °C bis 700 °C beträgt.

4. Verfahren gemäß einem der Ansprüche 1 bis 3, wobei die Polymermasse (A) neben dem mindestens einen Styrol-Copolymer (I) enthält:
III) höchstens 30 Gew.-%, bezogen auf das Gesamtgewicht der Polymermasse (A), an Polyolefinen (III);
IV) höchstens 4,9 Gew.-%, bezogen auf das Gesamtgewicht der Polymermasse (A), an Acrylnitril-basierten (Co)-Polymeren (IV); und
V) höchstens 4,9 Gew.-%, bezogen auf das Gesamtgewicht der Polymermasse (A), an Polyestern (V).

5. Verfahren gemäß einem der Ansprüche 1 bis 4, wobei die Polymermasse (A) eine thermoplastische Formmasse bestehend aus
I) 10 bis 100 Gew.-%, bezogen auf Gesamtgewicht der Polymermasse (A), mindestens eines Styrol-Copolymers (I), umfassend
la) 10 bis 99 Gew.-%, bezogen auf Styrol-Copolymer (I), an Wiederholungseinheiten (la), die von Styrol stammen; und
lb) 1 bis 90 Gew.-%, bezogen auf Styrol-Copolymer (I), an Wiederholungseinheiten (Ib);
Ic) 0 bis 10 Gew.-%, vorzugsweise 0 bis 5 Gew,-%, besonders bevorzugt 0 bis 3 Gew.-% weiterer copolymerisierbarer Monomere, insbesondere ausgewählt aus der Gruppe Maleinsäureanhydrid, n-Phyenylmaleinimid, Paramethylstyrol, (Meth)acrylnitril und Alkylacrylat, und
II) optional 0 bis 90 Gew.-%, bezogen auf das Gesamtgewicht der Polymermasse (A), an Polystyrol (II),
ist, wobei die Ceiling-Temperatur des Homopolymers aus (Ib) mindestens 50 K unterhalb der Ceiling-Temperatur des Homopolymers aus dem Monomer (la) liegt.

6. Verfahren gemäß einem der Ansprüche 1 bis 5, wobei Styrol-Copolymer (I) enthält:
la) 70 bis 98 Gew.-%, bezogen auf Styrol-Copolymer (I), an Wiederholungseinheiten (la), die von Styrol stammen; und
lb) 2 bis 30 Gew.-%, bezogen auf Styrol-Copolymer (I), an Wiederholungseinheiten (Ib), die von einem Monomer stammen, dessen Homopolymere eine Ceiling Temperatur unter 350 °C aufweisen
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe aus Maleinsäureanhydrid, n-Phenylmaleinimid, Paramethylstyrol, (Meth)-acrylnitril und Alkylacrylat.

7. Verfahren gemäß einem der Ansprüche 1 bis 5, wobei Styrol-Copolymer (I) enthält:
la) 50 bis 85 Gew.-%, bezogen auf Styrol-Copolymer (I), an Wiederholungseinheiten (la), die von Styrol stammen; und
lb) 15 bis 50 Gew.-%, bezogen auf Styrol-Copolymer (I), an Wiederholungseinheiten (Ib), die von einem Monomer stammen, dessen Homopolymere eine Ceiling Temperatur unter 350 °C aufweisen
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe aus Maleinsäureanhydrid, n-Phenylmaleinimid, Paramethylstyrol, (Meth)-acrylnitril und Alkylacrylat.

8. Verfahren gemäß einem der Ansprüche 1 bis 7, wobei die Wiederholungseinheiten (Ib) von Methylmethacrylat und/oder alpha-Methylstyrol, bevorzugt von Methylmethacrylat stammen.

9. Verfahren gemäß einem der Ansprüche 1 bis 8, wobei der Pyrolysereaktor (P) ein Wirbelschichtreaktor ist, bevorzugt umfassend eine Siliciumcarbid-Wirbelschicht in der Reaktionszone (R).

10. Verfahren gemäß einem der Ansprüche 1 bis 9, wobei zumindest ein Teil der in Schritt e) erhaltenen weiteren Komponenten in die Reaktionszone (R) des Pyrolysereaktors (P) zurückgeführt wird, vorzugsweise kontinuierlich in die Reaktionszone (R) zurückgeführt wird, wobei die weiteren Komponenten vorzugsweise im Wesentlichen aus Styrol-Oligomeren bestehen.

11. Verfahren zum Senken der Temperatur und/oder Zeit, die für die Herstellung von Styrol-Monomeren aus Styrol-(Co-)polymeren durch thermische Depolymerisation erforderlich ist, umfassend das Einbauen von 1 bis 90 Gew.-%, bezogen auf das Styrolpolymer, an Wiederholungseinheiten (Ib), wobei die Ceiling-Temperatur des Homopolymers aus (Ib) mindestens 50 K unterhalb der Ceiling-Temperatur von Polystyrol liegt, und wobei das Depolymerisations-Verhalten des so erhaltenen Styrol-Copolymeren unter 250 °C dem Depolymerisations-Verhalten von reinem Polystyrol entspricht.

12. Verwendung eines Styrol-Copolymers (I) umfassend:
la) 50 bis 99 Gew.-%, bezogen auf Styrol-Copolymer (I), an Wiederholungseinheiten (la), die von Styrol stammen; und
lb) 1 bis 50 Gew.-%, bezogen auf Styrol-Copolymer (I), an Wiederholungseinheiten (Ib), die von einem Monomer stammen, dessen Homopolymere eine Ceiling Temperatur unter 350 °C aufweisen, wobei die Wiederholungseinheiten (Ib) bevorzugt von Methylmethacrylat und/oder alpha-Methylstyrol, mehr bevorzugt von Methylmethacrylat stammen;
Ic) 0 bis 10 Gew.-%, vorzugsweise 0 bis 5 Gew,-%, besonders bevorzugt 0 bis 3 Gew.-% weiterer copolymerisierbarer Monomere, ausgewählt aus der Gruppe Maleinsäureanhydrid, n-Phenylmaleinimid, Paramethylstyrol, (Meth)acrylnitril, und Alkylacrylat,
zur Herstellung von Styrol-Monomeren durch thermische Depolymerisation.

13. Verwendung einer thermoplastischen Polymermasse (A) enthaltend:
I) 10 bis 100 Gew.-%, bezogen auf das Gesamtgewicht der Polymermasse (A), mindestens eines Styrol-Copolymers (I), umfassend
la) 10 bis 99 Gew.-%, bezogen auf Styrol-Copolymer (I), an Wiederholungseinheiten (la), die von Styrol stammen; und
lb) 1 bis 90 Gew.-%, bezogen auf Styrol-Copolymer (I), an Wiederholungseinheiten (Ib), die von einem Monomer stammen, dessen Homopolymere eine Ceiling-Temperatur unter 350 °C aufweisen;
II) optional 0 bis 90 Gew.-%, bezogen auf das Gesamtgewicht der Polymermasse (A), an Polystyrol (II),
zur Herstellung von Styrol-Monomeren durch thermische Depolymerisation bei einer geringeren Temperatur, als die Temperatur, die unter sonst gleichen Bedingungen für die Herstellung der gleichen Menge an Styrol-Monomeren durch Depolymerisation von reinem Polystyrol (GPPS) erforderlich ist.

14. Verwendung von Wiederholungseinheiten (Ib) in einem Styrol-Copolymer in einer Menge von 1 bis 90 Gew.-%, bezogen auf das Styrol-Copolymer, um die Temperatur und/oder Zeit zu senken, die für die Herstellung von Styrol-Monomeren aus dem Styrol-Copolymer durch thermische Depolymerisation erforderlich ist, wobei die Ceiling-Temperatur des Homopolymers aus (Ib) mindestens 50 K unterhalb der Ceiling-Temperatur von Polystyrol liegt, und wobei das Depolymerisations-Verhalten des so erhaltenen Styrol-Copolymeren unter 250 °C dem Depolymerisations-Verhalten von reinem Polystyrol entspricht.

15. Polymermasse (A) für die Herstellung von Styrol-Monomeren durch Depolymerisation, enthaltend
I) 10 bis 100 Gew.-%, bezogen auf Gesamtgewicht der Polymermasse (A), mindestens eines Styrol-Copolymers (I), umfassend
la) 50 bis 99 Gew.-%, bezogen auf Styrol-Copolymer (I), an Wiederholungseinheiten (la), die von Styrol stammen; und
lb) 1 bis 50 Gew.-%, bezogen auf Styrol-Copolymer (I), an Wiederholungseinheiten (Ib) die von einem Monomer stammen, dessen Homopolymere eine Ceiling Temperatur unter 350 °C aufweisen, wobei die Wiederholungseinheiten (Ib) bevorzugt von Methylmethacrylat und/oder alpha-Methylstyrol, mehr bevorzugt von Methylmethacrylat stammen;
Ic) 0 bis 10 Gew.-%, vorzugsweise 0 bis 5 Gew,-%, besonders bevorzugt 0 bis 3 Gew.-% weiterer copolymerisierbarer Monomere, insbesondere ausgewählt aus der Gruppe Maleinsäureanhydrid, n-Phenylmaleinimid, Paramethylstyrol, (Meth)acrylnitril und Alkylacrylat,
II) optional 0 bis 90 Gew.-%, bezogen auf das Gesamtgewicht der Polymermasse (A), an Polystyrol (II),
wobei neben dem Styrol-Copolymer (I) und gegebenenfalls dem Polystyrol (II) die Polymermasse (A) zusätzlich weitere Komponenten enthält,
wobei das Depolymerisations-Verhalten der Polymermasse (A) unter 250 °C dem Depolymerisations-Verhalten von reinem Polystyrol entspricht, und wobei das thermische Spalten der Polymermasse (A) zu Styrol-Monomeren in einem Verfahren gemäß einem der Ansprüche 1 bis 10 schneller und/oder bei einer niedrigeren Temperatur abläuft, als das thermische Spalten von Polystyrol.
